# DEMANDE DE BREVET EUROPEEN

(11) **EP 1 331 748 A2**
(43) Date de publication de la demande: **30.07.2003**
(21) Numéro de dépôt: 03290188.6
(22) Date de dépôt: 24.01.2003
(51) Int. Cl.: H04J 14/02

(54) **Méthode de sécurisation d'un réseau de télécommunication optique en anneau ainsi que noeud de communication à amplification et concentrateur de trafic**

(30) Priorité: 24.01.2002 FR 0200860
(71) Demandeur: ALCATEL, 75008 Paris (FR)
(72) Inventeur: Bisson, Arnaud, 91400 Orsay (FR); Noirie, Ludovic, 91620 Nozay (FR)
(74) Mandataire: Sciaux, Edmond

(57) **Abrégé**

La présente invention se rapporte au domaine des réseaux de télécommunications optiques et décrit plus particulièrement une méthode et des dispositifs assurant la sécurisation d'un réseau de télécommunications optiques en anneau. La méthode selon l'invention correspond à une méthode de sécurisation d'un réseau de télécommunications optiques en anneau, le réseau incluant un concentrateur de trafic (1) et un noeud de communication (N3) interconnectés via une fibre optique (2) du réseau, le concentrateur émettant des signaux optiques (s1, s2) transportés dans la fibre et destinés au noeud. La méthode selon l'invention comprend les étapes suivantes successives : une étape de création, lors de l'établissement du réseau, d'une coupure virtuelle (C) entre le concentrateur et le noeud, une étape de déplacement lors de la détection d'une rupture au moins partielle de la fibre limitant ou interrompant la transmission des signaux au noeud, de la coupure virtuelle pour qu'elle coïncide avec la rupture de manière à rétablir la réception des signaux optiques par le noeud.

## Description

La présente invention se rapporte au domaine des réseaux de télécommunication optique et décrit plus particulièrement une méthode et des dispositifs assurant la sécurisation d'un réseau de télécommunication optique en anneau.

De manière connue, des réseaux tels que certains réseaux métropolitains couvrant des zones géographiques assez importantes et permettant l'interconnexion de réseaux locaux par exemple situés à moins de 100 km les uns des autres, présentent une architecture de type anneau. De tels réseaux comprennent généralement :
- un concentrateur de trafic distribuant à l'intérieur du réseau des signaux optiques dits descendants multiplexés en longueurs d'onde issus du réseau fédérateur ou « backone », et recevant de l'intérieur du réseau en anneau des signaux optiques dits montants multiplexés en longueurs d'onde et les transmettant à ce réseau fédérateur,
- une fibre optique dédiée au transport des signaux descendants à l'intérieur du réseau depuis le concentrateur,
- une autre fibre optique distincte dédiée au transport des signaux montants à l'intérieur du réseau et destinés au concentrateur,
- des noeuds de communication, dits de fonctionnement, associés aux deux fibres, comprenant chacun un OADM (Optical Add/Drop Multiplexer en anglais) et aptes à dériver une partie du trafic (sélection d'une ou plusieurs longueurs d'onde du signal multiplexé descendant) pour le transmettre à un réseau local et à insérer leur propre trafic en direction du concentrateur (ajout d'une ou plusieurs longueurs d'onde dans le signal multiplexé montant) tout en laissant transiter l'ensemble des longueurs d'onde des signaux multiplexés descendants et montants,
- des noeuds de communication à amplification, comprenant également chacun un OADM ainsi que des moyens optiques d'amplification, disposés dans chacune des fibres pour recevoir et amplifier les signaux se propageant au sein du réseau en anneau.

Afin d'assurer la réception par exemple des signaux descendants par le réseau local, même en cas d'interruption du réseau en anneau, les réseaux en anneau de l'art antérieur comportent une fibre supplémentaire de sécurisation ainsi qu'un noeud de communication supplémentaire de sécurisation par noeud de communication de fonctionnement, le noeud de sécurisation étant sensiblement identique à ce dernier, lié au même réseau local et associé à la fibre de sécurisation.

Plus précisément, le concentrateur de trafic duplique les signaux descendants. Une partie de ces signaux, dits de fonctionnement, sont transportés par une première fibre optique jusqu'en amont du noeud de fonctionnement suivant un sens de propagation donné. Une autre partie de ces signaux, dits de sécurisation, sont transportés par la fibre de sécurisation jusqu'en amont du noeud de sécurisation dans le sens opposé aux signaux de fonctionnement. Ensuite, des moyens d'aiguillage couplés avec la première fibre et la fibre de sécurisation activent l'un des noeuds en fonction de l'état de transmission du réseau, ceci en permettant le passage des signaux descendants de fonctionnement ou de sécurisation dans l'OADM correspondant.

Naturellement, des noeuds de communication à amplification sont également insérés dans la fibre de sécurisation.

Les documents US 5.680.235 et WO 99.03230 décrivent de tels réseaux en anneau nécessitant l'utilisation de deux fibres pour permettre deux états de fonctionnement : une transmission normale et une transmission de secours, en cas de rupture de l'anneau.

La duplication des fibres optiques et des différents noeuds de communication, notamment des OADM et des moyens d'amplification, engageant un surcoût important, les réseaux sécurisés de l'art antérieur ne sont donc pas satisfaisants.

La présente invention a pour objet de mettre au point une méthode et des dispositifs assurant à faible coût la sécurisation du trafic dans un réseau de télécommunications optiques en anneau.

A cet effet, la présente invention propose d'abord une méthode de sécurisation d'un réseau de télécommunications optiques en anneau, le réseau incluant un concentrateur de trafic et un noeud de communication interconnectés via une fibre optique du réseau, le concentrateur émettant des signaux optiques transportés dans la fibre et destinés au noeud,
caractérisée en ce qu'elle consiste à utiliser une même fibre dans un sens lorsque le réseau est dans un état de transmission normal, et dans le sens opposé lorsque le réseau est dans un état de transmission de secours.

Cette méthode assure ainsi la sécurisation de la transmission des signaux optiques descendants émis par le concentrateur car, en cas de rupture de l'anneau, chaque noeud du réseau va recevoir les signaux descendants, qui lui sont destinés, du côté de la fibre opposé à celui de la rupture, par rapport au noeud.

L'invention propose aussi un noeud de communication d'un réseau sécurisé de télécommunications optiques en anneau, comprenant :
- une section de fibre optique, pour le transport de signaux optiques,
- des moyens d'extraction pour extraire des signaux optiques transportés par la section de fibre,
caractérisé en ce que, pour permettre d' utiliser une même section de fibre dans un sens lorsque le réseau est dans un état de transmission normal, et dans le sens opposé lorsque le réseau est dans un état de transmission de secours, les moyens d'extraction sont de type coupleur de puissance et sont bidirectionnels,
et en ce qu'il comprend en outre :
- des moyens d'aiguillage pour diriger les signaux optiques extraits par les moyens d'extraction,
- des moyens de contrôle pour détecter l'état de transmission du réseau et piloter les moyens d'aiguillage en fonction de cet état.

Le coupleur de puissance selon l'invention prélève une fraction du signal multiplexé en longueurs d'onde descendant au lieu de sélectionner une ou plusieurs longueurs d'onde dans ce signal comme les OADM de l'art antérieur. Un tel coupleur est moins onéreux qu'un OADM et permet de diffuser une même longueur d'onde vers plusieurs noeuds.

De préférence, le noeud peut comprendre une porte optique, pilotée par les moyens de contrôle et insérée dans la section de fibre pour transmettre ou supprimer des signaux optiques.

Par exemple, en cas de rupture partielle de la fibre, la porte optique permet la suppression totale du signal descendant résiduel de mauvaise qualité.

L'invention concerne également un noeud de communication d'un réseau sécurisé de télécommunications optiques en anneau, comprenant :
- une section de fibre optique, pour le transport de signaux optiques,
- des moyens d'insertion pour insérer des signaux optiques dans la section de fibre,
caractérisé en ce que, pour permettre d'utiliser une même section de fibre dans un sens lorsque le réseau est dans un état de transmission normal, et dans le sens opposé lorsque le réseau est dans un état de transmission de secours, les moyens d'insertion sont de type coupleur de puissance et sont bidirectionnels,
et en ce qu'il comprend en outre :
- des moyens d'aiguillage pour diriger des signaux optiques à insérer dans la section de fibre vers les moyens d'insertion,
- des moyens de contrôle pour détecter l'état de transmission du réseau et piloter les moyens d'aiguillage en fonction de cet état.

Les moyens d'insertion selon l'invention permettent d'injecter des signaux optiques dans la section de fibre dans les deux sens de propagation.

De même, l'invention concerne un noeud de communication à amplification d'un réseau sécurisé de télécommunications optiques en anneau, comprenant :
- au moins une section de fibre optique, pour le transport de signaux optiques,
- des moyens d'amplification pour chaque section de fibre, insérés dans la section de fibre associée, pour amplifier des signaux optiques,
caractérisé en ce que, pour permettre d'utiliser une même section de fibre dans un sens lorsque le réseau est dans un état de transmission normal, et dans le sens opposé lorsque le réseau est dans un état de transmission de secours, il comprend en outre :
- des moyens d'aiguillage pour chaque section de fibre, insérés dans la section de fibre associée, pour diriger les signaux optiques vers les moyens d'amplification associés,
- des moyens de contrôle pour détecter l'état de transmission du réseau et piloter les moyens d'aiguillage en fonction de cet état.

Avantageusement, le noeud à amplification selon l'invention peut comprendre des moyens d'extraction de type coupleur de puissance pour extraire des signaux optiques dits descendants transportés par la section de fibre du réseau dédiée au transport des signaux descendants.

De préférence, le noeud à amplification selon l'invention peut comprendre des moyens d'insertion de type coupleur de puissance pour insérer des signaux optiques dits montants dans la section de fibre du réseau dédiée au transport des signaux montants.

De plus, l'invention se rapporte à un concentrateur de trafic d'un réseau sécurisé de télécommunications optiques en anneau, caractérisé en ce que, pour permettre d'utiliser une même section de fibre dans un sens lorsque le réseau est dans un état de transmission normal, et dans le sens opposé lorsque le réseau est dans un état de transmission de secours, il comprend :
- deux sections distinctes d'une première fibre optique,
- des moyens d'aiguillage connectés à l'une des extrémités de chacune des sections de la première fibre pour injecter à ces deux extrémités des signaux optiques sensiblement identiques destinés à des noeuds du réseau,
- deux sections distinctes d'une deuxième fibre optique distincte de la première fibre,
- des moyens d'aiguillage connectés à l'une des extrémités de chacune des sections de la deuxième fibre pour recevoir par l'une de ces deux extrémités un signal optique envoyé par un noeud du réseau,
- des moyens de contrôle pour détecter l'état de transmission du réseau et piloter les moyens d'aiguillage en fonction de cet état.

De préférence, les moyens d'aiguillage du concentrateur peuvent comprendre des commutateurs optiques fonctionnant deux à deux et permettant de sécuriser le réseau en cas de panne au sein du concentrateur.

Avantageusement, les moyens d'aiguillage comprennent des commutateurs optiques à trois états formant un quadripôle A, B, C, D et permettant la propagation des signaux optiques, entre les quatre pôles, selon l'un quelconque des trois modes de propagation suivants :
- entre les pôles A et B d'une part, et entre les pôles C et D d'autre part, correspondant à un mode direct de propagation;
- entre les pôles A et C d'une part, et entre les pôles B et D d'autre part, correspondant à un mode croisé de propagation;
- entre les pôles A et D, d'une part, et entre les pôles B et C d'autre part, correspondant à un mode transparent de propagation.

Les caractéristiques et objets de la présente invention ressortiront de la description détaillée donnée ci-après en regard des figures annexées, présentées à titre illustratif et nullement limitatif.

Dans ces figures :
- la figure 1 représente un diagramme d'un réseau sécurisé de télécommunications optiques comprenant des noeuds dans un mode de réalisation préféré de l'invention, diagramme montrant l'état normal de transmission de signaux descendants via une première fibre du réseau,
- la figure 2 représente un diagramme du réseau de la figure 1 montrant la transmission de signaux descendants en état de rupture de la première fibre,
- la figure 3 représente le diagramme du réseau de la figure 1 montrant l'état normal de transmission d'un signal montant par une deuxième fibre du réseau,
- la figure 4 représente un diagramme du réseau de la figure 3 montrant la transmission d'un signal montant en état de rupture de la deuxième fibre,
- la figure 5 représente une vue partielle d'un concentrateur de trafic selon un mode de réalisation préféré de l'invention montrant la sécurisation de l'émission de signaux descendants,
- la figure 6 représente une vue partielle d'un concentrateur de trafic selon un autre mode de réalisation préféré de l'invention,
- les figures 7 à 9 représentent le commutateur à trois états appartenant au concentrateur de la figure 6.

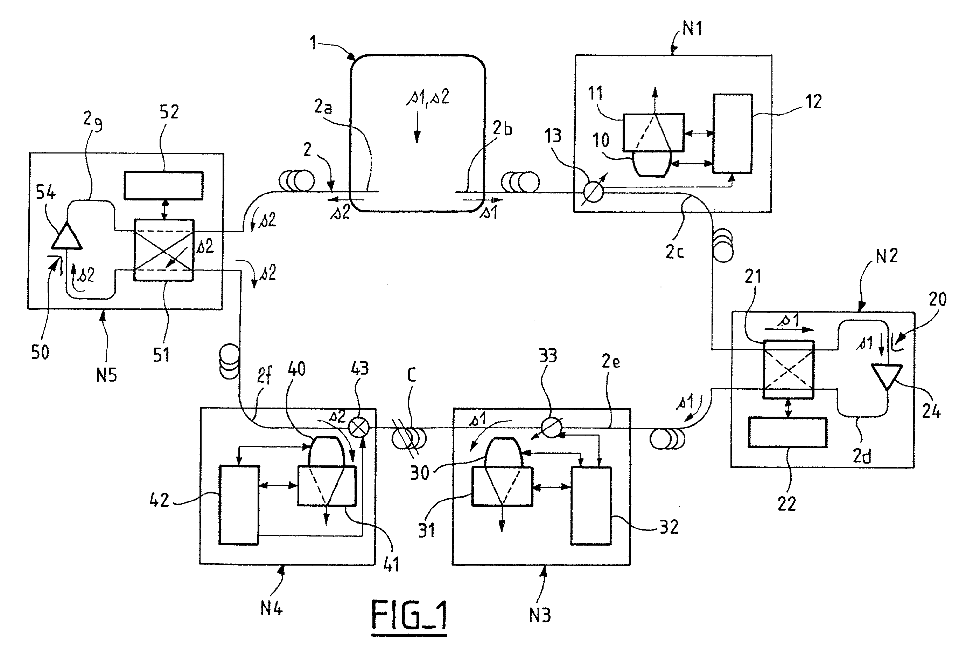

La **figure 1** représente un diagramme d'un réseau sécurisé de télécommunications optiques comprenant des noeuds dans un mode de réalisation préféré de l'invention, diagramme montrant l'état normal de transmission de signaux descendants via une première fibre optique du réseau. Le réseau comprend :
- un concentrateur de trafic 1 émettant simultanément de chaque côté des signaux descendants multiplexés en longueurs d'onde sensiblement identiques,
- une première fibre optique 2 dédiée au transport des signaux descendants et comprenant notamment deux sections de fibre 2a, 2b appartenant au concentrateur 1 pour l'injection de signaux descendants dans l'une des extrémités de chacune des sections,
- des noeuds de communication N1, N3, N4 et à amplification N2, N5 interconnectés optiquement avec le concentrateur 1 via la fibre 2,

Chaque noeud de communication N1, N3, N4 comprend selon l'invention :
- une section 2c, 2e, 2f de la fibre 2,
- des moyens d'extraction bidirectionnels 10, 30, 40 de type coupleur de puissance pour extraire une fraction de la puissance des signaux optiques transitant dans le noeud via sa section de fibre,
- des moyens d'aiguillage 11, 31, 41 de type commutateur 2x1 à deux branches pour diriger les signaux extraits par les moyens d'extraction respectivement 10, 30, 40,
- des moyens de contrôle 12, 32, 42 pour détecter l'état de transmission du réseau c'est-à-dire de la fibre 2 et piloter les moyens d'aiguillage 11, 31, 41 en fonction de cet état,
- une porte optique 13, 33, 43 pilotée par les moyens de contrôle 12, 32, 42 respectivement, pour transmettre ou supprimer des signaux optiques.

De plus, chaque noeud de communication à amplification N2, N5 comprend :
- une section 2d, 2g de la fibre 2,
- des moyens d'aiguillage 21, 51, de type commutateur optique 2x2 à deux états (mode direct de propagation, mode croisé de propagation) insérés dans la section de fibre 2d, 2g respectivement, pour diriger les signaux transportés vers des moyens d'amplification optique 24, 54, également insérés dans cette section de fibre,
- des moyens de contrôle 22, 52 pour détecter l'état de transmission du réseau c'est-à-dire de la fibre 2 et piloter les moyens d'aiguillage 21, 51 en fonction de cet état,
- des moyens d'extraction 20, 50 de type coupleur de puissance pour extraire des signaux optiques transportés par la section de fibre 2d, 2g respectivement.

Ainsi le concentrateur 1 émet simultanément vers les extrémités des sections de fibre 2a, 2b des signaux optiques s1, s2 sensiblement identiques dont le trajet est représenté sur la figure 1. Selon une caractéristique essentielle de l'invention, une coupure virtuelle est créée entre deux noeuds à l'établissement du réseau ou lors d'une reconfiguration de celui-ci. Cette coupure C est située de préférence entre les deux noeuds adjacents N3, N4 les plus éloignés du concentrateur 1 par exemple en verrouillant la porte optique 43 du noeud N4. Il n'y donc alors aucune communication entre ces derniers en fonctionnement normal.

Le réseau selon l'invention organise essentiellement le trafic entre le concentrateur 1 d'une part et les noeuds N1 à N5 d'autre part. Le but étant, comme décrit ci-après, de protéger ce type de trafic. L'invention n'empêche cependant pas que du trafic inter noeuds puisse exister simultanément, y compris entre les noeuds situés de part et d'autre de la coupure virtuelle C, sans toutefois que ce trafic ait la même garantie de protection en cas de rupture de la fibre.

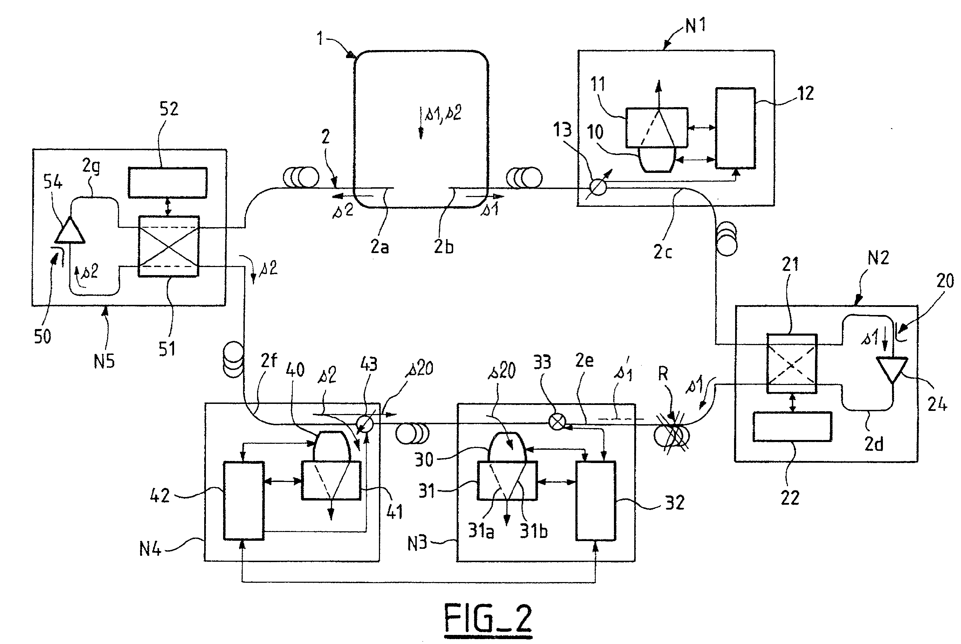

La **figure 2** représente un diagramme du réseau de la figure 1 montrant la transmission de signaux descendants s1, s2 en état de rupture R de la première fibre 2 par exemple située entre les noeuds N2 et N3.

Quand cette rupture R est détectée et localisée, par exemple par les moyens 32 du noeud N3 la coupure virtuelle est déplacée pas à pas vers la rupture physique R jusqu'à sa coïncidence avec cette dernière.

Dans ce but, la porte optique 43 pilotée par les moyens 42 en relation avec les moyens 32, est déverrouillée et autorise alors la transmission des signaux optiques s20 venant de l'extrémité 2a jusqu'au noeud N3 de façon à permettre la réception du signal optique qui lui est destiné.

Une fraction du signal s20 est ainsi prélevée de la section de fibre 2e par les moyens d'extraction 30 bidirectionnels puis dirigée dans la branche 31b au lieu de la branche 31a du commutateur 31, piloté automatiquement par les moyens 32. De cette façon, le sens de réception des signaux optiques par le noeud N3 est inversé par rapport au mode de fonctionnement normal du réseau.

Parallèlement, la porte optique 33 également pilotée par les moyens 33 est verrouillée. Ceci permet notamment en cas de rupture partielle laissant transmettre un signal s'1 avec un taux d'erreur important (trajet représenté en pointillé), d'éviter son mélange avec le signal optique s20 de bonne qualité.

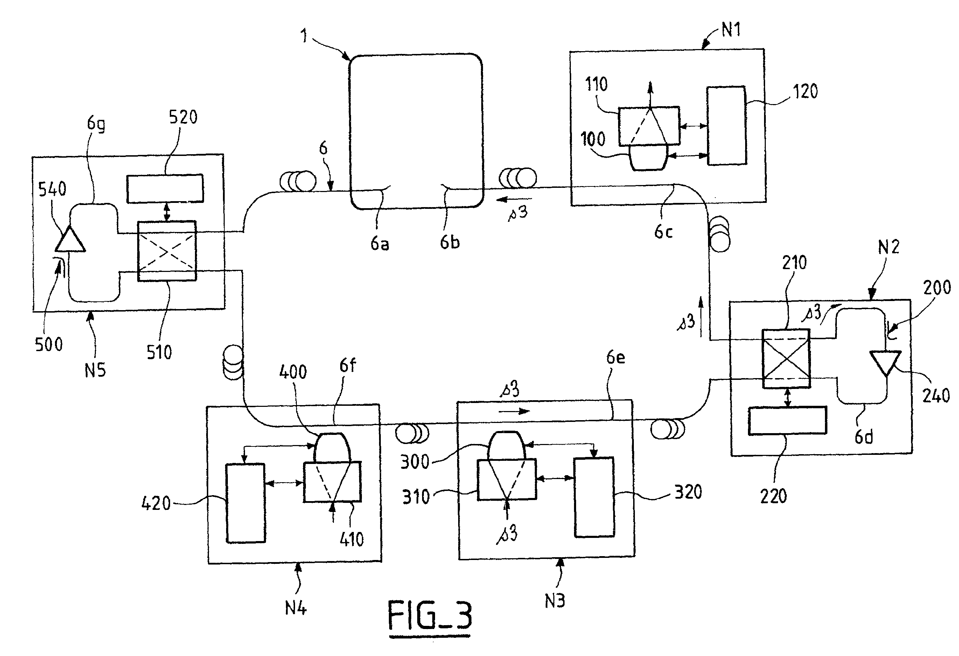

La **figure 3** représente le diagramme du réseau de la figure **1** montrant l'état normal de transmission d'un signal montant par une deuxième fibre du réseau 6 dédiée au transport des signaux montants.

Tous les noeuds de communication N1 à N5 sont interconnectés optiquement avec le concentrateur 1 via la fibre 6 qui comprend notamment deux sections de fibre 6a, 6b appartenant au concentrateur 1 pour la réception de signaux optiques montants. Chaque noeud N1 à N5 est capable d'émettre des signaux montants à des longueurs d'ondes distinctes des autres noeuds.

Chaque noeud de communication N1, N3, N4 comprend selon l'invention :
- une section 6c, 6e, 6f de la fibre 6,
- des moyens d'insertion bidirectionnels 100, 300, 400 de type coupleur de puissance pour insérer des signaux optiques dans sa section de fibre,
- des moyens d'aiguillage 110, 310, 410 de type commutateur 2x1 à deux branches pour diriger les signaux émis vers les moyens d'insertion respectivement 100, 300, 400,
- des moyens de contrôle 120, 320, 420 pour détecter l'état de transmission du réseau c'est-à-dire de la fibre 6 et piloter les moyens d'aiguillage 110, 310, 410 en fonction de cet état,

De plus, chaque noeud de communication à amplification N2, N5 comprend :
- une section 6d, 6g de la fibre 6,
- des moyens d'aiguillage 210, 510 de type commutateur optique 2x2 à deux états (mode direct de propagation, mode croisé de propagation) insérés dans la section de fibre 6d, 6g respectivement, pour diriger les signaux transportés par la section de fibre associée vers des moyens d'amplification optique 240, 540, également insérés dans cette section de fibre,
- des moyens de contrôle 220, 520 pour détecter l'état de transmission du réseau c'est-à-dire de la fibre 6 et piloter les moyens d'aiguillage 210, 510 en fonction de cet état,
- des moyens d'insertion de type coupleur de puissance 200, 500 pour insérer avant les moyens d'amplification 240, 540 des signaux optiques dans la section de fibre associée.

Les signaux montants se propagent suivant un sens de propagation déterminé en fonction de la branche choisie du commutateur optique dans le noeud émetteur.

A titre d'exemple, le noeud N3 émet un signal optique montant s3 dont le trajet en fonctionnement normal est représenté sur la figure 3. Ce signal s3 est reçu par le concentrateur 1 via la section de fibre 6b.

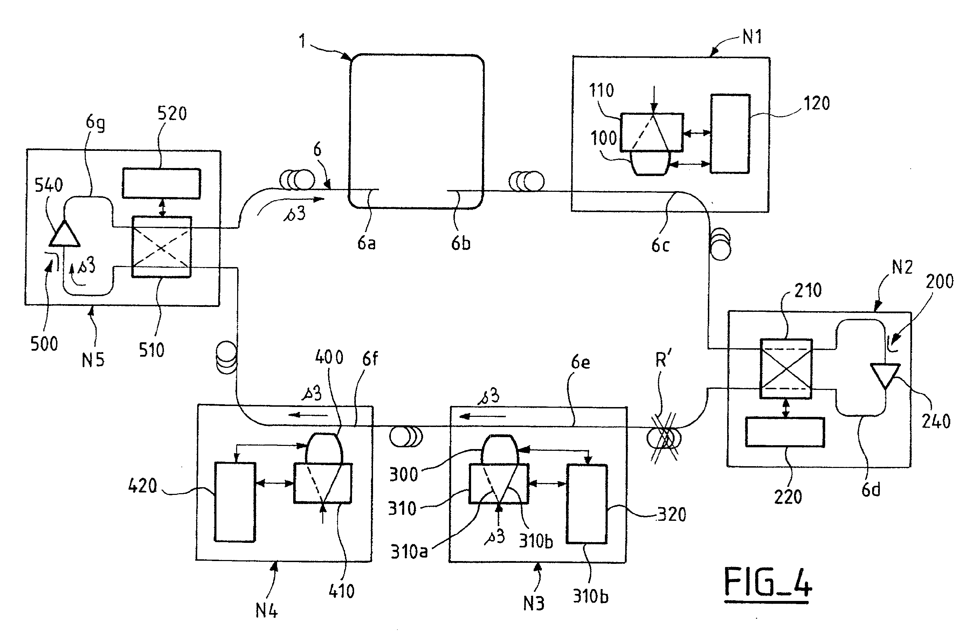

La **figure 4** représente un diagramme du réseau de la figure 3 montrant la transmission du signal montant s3 en état de rupture R' de la deuxième fibre 6 par exemple située entre les noeuds N2 et N3.

Cette rupture R' est détectée et localisée par exemple par les moyens 320 du noeud N3. Le signal s3 est alors dirigé dans la branche 310b au lieu de la branche 310a du commutateur 31, puis inséré de la section de fibre 6e par les moyens d'extraction 300 bidirectionnels et enfin transmis au concentrateur 1 via la section de fibre 6a au lieu de la section de fibre 6b en fonctionnement normal.

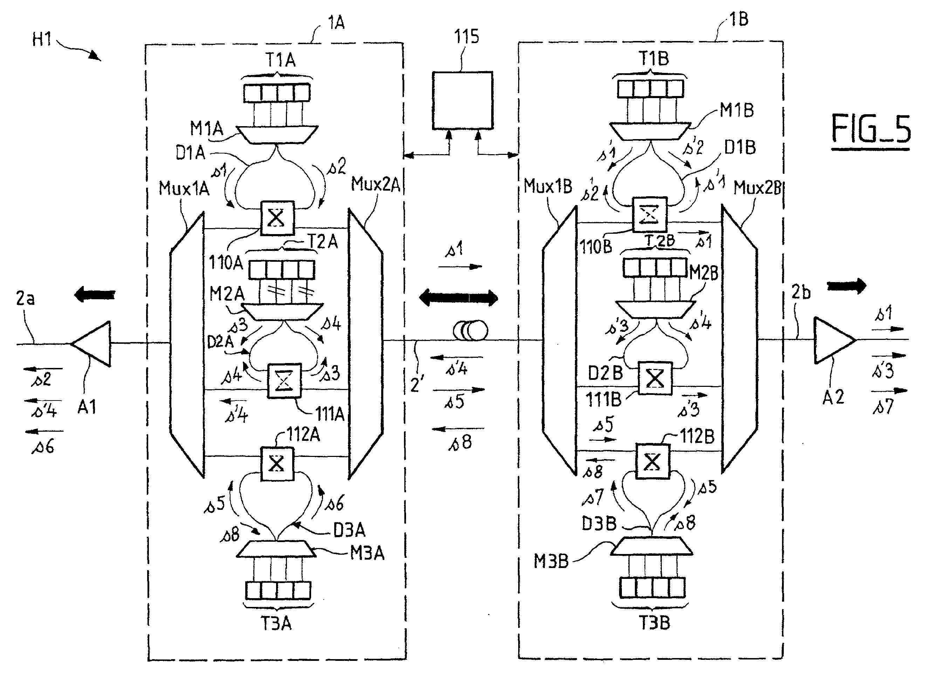

La **figure 5** représente une vue partielle d'un concentrateur selon un mode de réalisation préféré de l'invention montrant la sécurisation de l'émission de signaux descendants. Pour doubler la sécurisation du trafic descendant, le concentrateur H1 est dédoublé en deux parties 1A, 1B qui comprennent chacune:
- trois séries d'émetteurs T1A à T3B de signaux optiques à des longueurs d'onde données distinctes les unes des autres,
- un multiplexeur/démultiplexeur en longueurs d'onde M1A à M3B par série d'émetteurs, multiplexant les signaux issus d'une série d'émetteurs donnée notamment,
- un diviseur de puissance D1A à D3B par série d'émetteurs, séparant en deux signaux identiques les signaux multiplexés,
- des moyens d'aiguillage 110A à 112B pour chaque série d'émetteurs, de type commutateur optique 2x2 à deux états (mode direct de propagation, mode croisé de propagation) recevant les signaux descendants et les dirigeant vers les noeuds,
- deux multiplexeurs/démultiplexeurs Mux1A, Mux2A, Mux1B, Mux2B multiplexant les signaux issus des différentes séries d'émetteurs notamment,
- un amplificateur A1, A2 recevant les signaux multiplexés par les multiplexeurs/démultiplexeurs Mux1A, Mux2B respectivement,
- des moyens de contrôle 115 pour détecter l'état de transmission du réseau c'est-à-dire la qualité de l'émission des signaux descendants et piloter les moyens d'aiguillage 110A à 112B en fonction de cet état.

Les parties 1A et 1B sont interconnectées par une section de fibre bidirectionnelle 2'. Chacune des parties 1A, 1B est également connectée à une extrémité de section de fibre 2a, 2b appartenant à une première fibre, ceci afin d'injecter dans ces sections 2a, 2b des signaux optiques sensiblement identiques destinés à des noeuds du réseau.

Le concentrateur H1 comprend également :
- deux sections de fibre appartenant à une deuxième fibre (non représentée) distincte de la première fibre optique ainsi que d'autres moyens d'aiguillage (non représentés) connectés à l'une des extrémités de chacune des sections de deuxième fibre pour recevoir par l'une de ces deux extrémités un signal optique envoyé par un noeud du réseau,
- des moyens de contrôle (non représentés) pour détecter l'état de transmission de cette deuxième fibre et piloter les moyens d'aiguillage associés en fonction de cet état.

Les commutateurs des deux parties 1A et 1B fonctionnent deux à deux. Trois configurations sont possibles et décrites en suivant le trajet de signaux optiques depuis leur émission par les émetteurs jusqu'à leur injection dans les sections de fibre 2a, 2b.

En fonctionnement normal du concentrateur H1, les commutateurs sont positionnés comme les commutateurs 110A, 110B respectivement en position croisée et directe. Les signaux descendants s1 et s2 sensiblement identiques sont émis par le concentrateur H1 avec des sens de propagation opposés dans les sections de fibre 2a, 2b tandis que les signaux de double sécurisation s'1 et s'2 ne sont pas utilisés.

En cas de problème d'émission, ici entre les terminaux T2A et le multiplexeur/démultiplexeur M2A, les commutateurs sont positionnés comme les commutateurs 111A, 111B respectivement en position directe et croisée. Les signaux descendants s3 et s4 n'étant alors pas fiables, les signaux de double sécurisation s'3 et s'4 sont émis par le concentrateur 1 avec des sens de propagation opposés dans les sections de fibre 2a, 2b.

Les commutateurs peuvent aussi être positionnés comme les commutateurs 112A, 112B c'est-à-dire en positions croisées. Dans ce cas, l'un des signaux descendants s5, s6 émis dans la partie 1A est injecté sur la section de fibre 2a. L'un des signaux descendants de double sécurisation s7, s8 émis dans la partie 1B et identique au signal s5 est également injecté sur la section de fibre 2b.

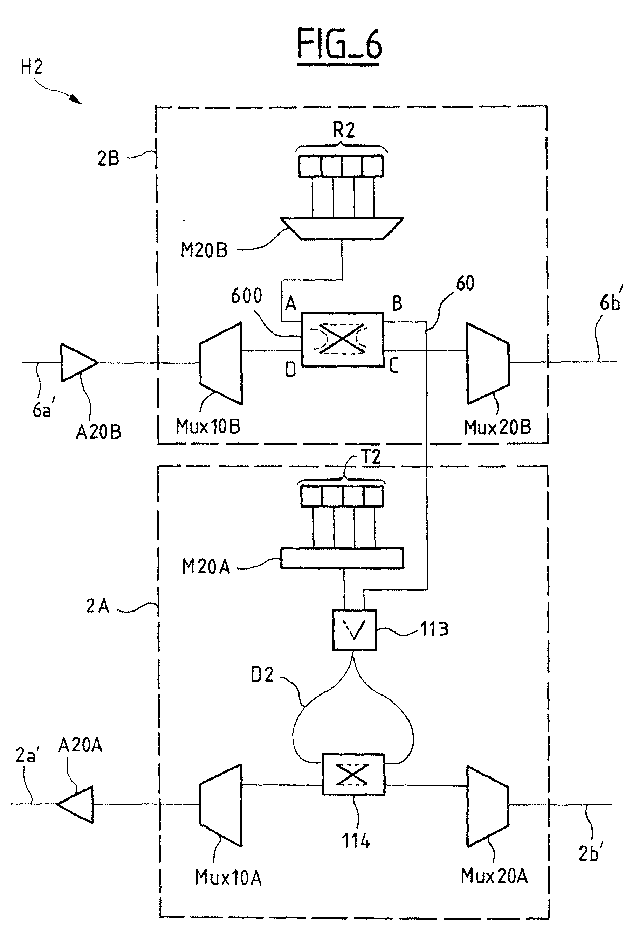

La **figure 6** représente une vue partielle d'un concentrateur de trafic H2 selon un autre mode de réalisation préféré de l'invention.

Le concentrateur H2 comprend quatre sections de fibre 2a', 2b', 6a', 6b' appartement à deux fibres optiques distinctes dédiées respectivement au transport de signaux descendants et montants dans le réseau.

Le concentrateur H2 comprend plus particulièrement deux parties 2A, 2B respectivement pour la gestion des signaux descendants et montants.

La partie 2A comprend :
- plusieurs séries d'émetteurs T2 (une seule est représentée) de signaux optiques des longueurs d'onde données distinctes les unes des autres,
- un multiplexeur/démultiplexeur en longueurs d'onde M20A par série d'émetteurs,
- des premiers moyens d'aiguillage 113, pour chaque série d'émetteurs, de type commutateur optique 2x1 à deux branches recevant les signaux optiques montants à retransmettre et les signaux descendants,
- un diviseur de puissance par série d'émetteurs D2 séparant en deux signaux identiques les signaux multiplexés,
- des seconds moyens d'aiguillage 114, pour chaque série d'émetteurs, de type commutateur optique 2x2 à deux états (mode direct de propagation, mode croisé de propagation) dirigeant les signaux à destination des noeuds,
- deux multiplexeurs/démultiplexeurs Mux10A, Mux20A par exemple multiplexant les signaux issus des différentes séries d'émetteurs et injectés dans les sections de fibres 2a', 2b',
- un amplificateur A20A, inséré dans la section de fibre 2a' recevant les signaux multiplexés par le multiplexeur/démultiplexeur Mux10A,
- des moyens de contrôle (non représentés) pour détecter l'état de transmission du réseau c'est-à-dire la qualité de l'émission des signaux descendants et piloter les moyens d'aiguillage 113, 114 en fonction de cet état.

La partie 2B comprend :
- plusieurs séries de récepteurs R2 (une seule est représentée) de signaux optiques des longueurs d'onde données distinctes les unes des autres,
- un multiplexeur/démultiplexeur en longueurs d'onde M20B par série de récepteurs,
- des moyens d'aiguillage 600 pour chaque série de récepteurs, de type commutateur optique 2x2 à trois états (mode direct de propagation, mode croisé de propagation, mode transparent), formant un quadripôle A, B, C, D recevant les signaux montants et les dirigeant à destination des récepteurs R2 ou de la partie 2A via une fibre d'interconnexion 60,
- deux multiplexeurs/démultiplexeurs Mux10B, Mux20B,
- un amplificateur A20B recevant de la section de fibre 6a' des signaux multiplexés montants,
- des moyens de contrôle (non représentés) pour détecter l'état de transmission du réseau c'est-à-dire la qualité de réception des signaux montants et piloter les moyens d'aiguillage 600 en fonction de cet état.

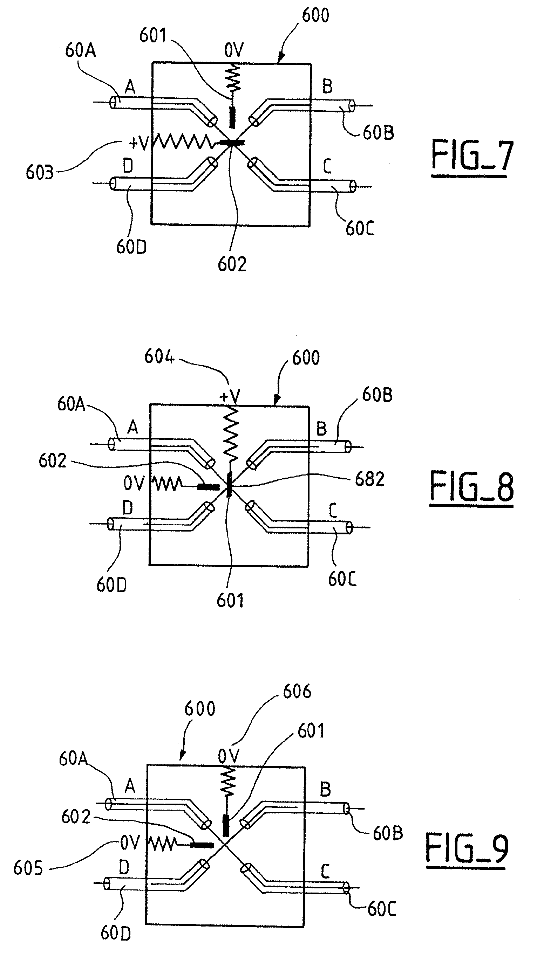

Les **figures 7 à 9** décrivent plus précisément un mode de réalisation du commutateur optique à trois états 600 formant un quadrilatère ABCD. Elles font appel en général aux techniques dites MEM pour Micro-Electro-Mécanique concernant des dispositifs mécaniques de petite ou de très petite taille à commande électrique. Le commutateur optique 600 comprend un miroir vertical 601 et un miroir horizontal 602 déplacés mécaniquement sous l'action d'une tension électrique afin d'orienter les signaux optiques, et des conduits optiques 60A à 60D.

Dans la **figure 7**, une tension 603 est appliquée sur le miroir horizontal 602 à deux faces réfléchissantes qui se déplace pour renvoyer les signaux optiques de A vers B et de C vers D. Cet état du commutateur 600 correspond au mode direct de propagation.

Dans la **figure 8**, une tension 604 est appliquée au contraire sur le miroir vertical 601 à deux faces réfléchissantes qui se déplace pour réfléchir les signaux optiques de A vers D et de B vers C. Cet état du commutateur 600 correspond au mode transparent de propagation.

Dans la **figure 9**, le commutateur 600 est au repos, en mode croisé de propagation, c'est-à-dire que le passage des signaux optiques se fait librement, entre les conduits 60A à 60D, entre A et C et entre B et D sans qu'aucune tension n'ait besoin d'être appliquée sur les broches de commande 605 et 606. Les deux miroirs mobiles 601, 602 sont dans leur position de repos.

On notera bien sûr que la réalisation d'un commutateur optique tel que décrit ci-dessus implique obligatoirement qu'une tension ne soit pas appliquée simultanément sur les broches 605 et 606 sous peine de voir le commutateur détruit. Ceci sera aisément contrôlé par l'intermédiaire d'un circuit logique du type OU exclusif (non représenté) qui empêche que les deux miroirs 601, 602 puissent être effectivement activés simultanément.

Bien entendu, la description qui précède a été donnée à titre purement illustratif. On pourra sans sortir du cadre de l'invention remplacer tout moyen par un moyen équivalent.

En particulier, les moyens de contrôle du trafic de signaux descendants peuvent être confondus avec les moyens de contrôle du trafic de signaux montants.

De plus, un concentrateur de trafic selon l'invention peut comprendre à la fois deux parties identiques pour la double sécurisation du trafic des signaux descendants telles que décrites pour le concentrateur **H1** et une fibre d'interconnexion pour la communication entre trafic descendant et montant telle que décrite pour le concentrateur H2.

Les moyens d'aiguillage du trafic montant d'un concentrateur selon l'invention peuvent comprendre des paires de commutateurs optiques à deux états 2x2 au lieu de commutateurs optiques à trois états.

## Revendications

1. Méthode de sécurisation d'un réseau de télécommunications optiques en anneau, le réseau incluant un concentrateur de trafic (1) et un noeud de communication (N3) interconnectés via une fibre optique (2) du réseau, le concentrateur émettant des signaux optiques (s1, s2) transportés dans la fibre et destinés au noeud,
**caractérisée en ce qu'**elle consiste à utiliser une même fibre dans un sens (s1) lorsque le réseau est dans un état de transmission normal, et dans le sens opposé (s2) lorsque le réseau est dans un état de transmission de secours.

2. Noeud de communication (N1, N3, N4) d'un réseau sécurisé de télécommunications optiques en anneau, comprenant :
- une section de fibre optique (2c, 2e, 2f), pour le transport de signaux optiques (s1, s2),
- des moyens d'extraction (10, 30, 40) pour extraire des signaux optiques transportés par la section de fibre,
**caractérisé en ce que**, pour permettre d' utiliser une même section de fibre dans un sens (s1) lorsque le réseau est dans un état de transmission normal, et dans le sens opposé (s2) lorsque le réseau est dans un état de transmission de secours, les moyens **d'extraction** (10, 30, 40) sont de type coupleur de puissance et sont bidirectionnels,
et **en ce qu'**il comprend en outre :
- des moyens d'aiguillage (11, 31, 41) pour diriger les signaux optiques **extraits** par les moyens d'extraction,
- des moyens de contrôle (12, 32, 42) pour détecter l'état de transmission du réseau et piloter les moyens d'aiguillage en fonction de cet état.

3. Noeud de communication (N1, N3, N4) selon la revendication 2, **caractérisé en ce qu'**il comprend une porte optique (13, 33, 43), pilotée par les moyens de contrôle (12, 32, 42) et insérée dans la section de fibre (2c, 2e, 2f), pour transmettre ou supprimer des signaux optiques.

4. Noeud de communication (N1, N3, N4) d'un réseau sécurisé de télécommunications optiques en anneau, comprenant :
- une section de fibre optique (6c, 6e, 6f), pour le transport de signaux optiques,
- des moyens d'insertion (100, 300, 400) pour insérer des signaux optiques dans la section de fibre,
**caractérisé en ce que**, pour permettre d'utiliser une même section de fibre dans un sens (s1) lorsque le réseau est dans un état de transmission normal, et dans le sens opposé (s2) lorsque le réseau est dans un état de transmission de secours, les moyens **d'insertion** (100, 300, 400) sont de type coupleur de puissance et sont bidirectionnels,
et **en ce qu'**il comprend en outre :
- des moyens d'aiguillage (110, 310, 410) pour diriger des signaux optiques à insérer dans la section de fibre vers les moyens d'insertion,
- des moyens de contrôle (120, 320, 420) pour détecter l'état de transmission du réseau et piloter les moyens d'aiguillage en fonction de cet état.

5. Noeud de communication à amplification (N2, N5) d'un réseau sécurisé de télécommunications optiques en anneau, comprenant :
- au moins une section de fibre optique (2d, 6d, 2g, 6g), pour le transport de signaux optiques,
- des moyens d'amplification (24, 240, 54, 540) pour chaque section de fibre, insérés dans la section de fibre associée, pour amplifier des signaux optiques,
**caractérisé en ce que**, pour permettre d'utiliser une même section de fibre dans un sens (s1) lorsque le réseau est dans un état de transmission normal, et dans le sens opposé (s2) lorsque le réseau est dans un état de transmission de secours, il comprend en outre :
- des moyens d'aiguillage (21, 210, 51, 510) pour chaque section de fibre, insérés dans la section de fibre associée, pour diriger les signaux optiques vers les moyens d'amplification associés,
- des moyens de contrôle (22, 220, 52, 520) pour détecter l'état de transmission du réseau et piloter les moyens d'aiguillage en fonction de cet état.

6. Noeud de communication à amplification (N2, N5) selon la revendication 5 **caractérisé en ce qu'**il comprend des moyens d'extraction (20, 50) de type coupleur de puissance pour extraire des signaux optiques dits descendants transportés par la section de fibre du réseau (2d, 2g) dédiée au transport des signaux descendants.

7. Noeud de communication à amplification selon l'une des revendications 5 ou 6 **caractérisé en ce qu'**il comprend des moyens d'insertion (200, 500) de type coupleur de puissance pour insérer des signaux optiques dits montants dans la section de fibre du réseau (6d, 6g) dédiée au transport des signaux montants.

8. Concentrateur de trafic (H1, H2) d'un réseau sécurisé de télécommunications optiques en anneau, **caractérisé en ce que**, pour permettre d'utiliser une même section de fibre dans un sens (s1) lorsque le réseau est dans un état de transmission normal, et dans le sens opposé (s2) lorsque le réseau est dans un état de transmission de secours, il comprend :
- deux sections distinctes d'une première fibre optique (2a, 2b, 2a', 2b'),
- des moyens d'aiguillage (110A à 112B) connectés à l'une des extrémités de chacune des sections de la première fibre pour injecter à ces deux extrémités des signaux optiques sensiblement identiques destinés à des noeuds du réseau,
- deux sections distinctes (6a, 6b, 6a', 6b') d'une deuxième fibre optique distincte de la première fibre,
- des moyens d'aiguillage (600) connectés à l'une des extrémités de chacune des sections de la deuxième fibre pour recevoir par l'une de ces deux extrémités un signal optique envoyé par un noeud du réseau,
- des moyens de contrôle pour détecter l'état de transmission du réseau et piloter les moyens d'aiguillage en fonction de cet état.

9. Concentrateur de trafic (H1) selon la revendication 8, **caractérisé en ce que** les moyens d'aiguillage (110A à 112B) comprennent des commutateurs optiques fonctionnant deux à deux.

10. Concentrateur de trafic (H2) selon l'une des revendications 8 ou 9 **caractérisé en ce que** les moyens d'aiguillage (600) comprennent des commutateurs optiques à trois états formant un quadripôle A, B, C, D et permettant la propagation des signaux optiques, entre les quatre pôles, selon l'un quelconque des trois modes de propagation suivants :
• entre les pôles A et B d'une part, et entre les pôles C et D d'autre part, correspondant à un mode direct de propagation;
• entre les pôles A et C d'une part, et entre les pôles B et D d'autre part, correspondant à un mode croisé de propagation;
• entre les pôles A et D, d'une part, et entre les pôles B et C d'autre part, correspondant à un mode transparent de propagation.
